# EUROPÄISCHE PATENTANMELDUNG

(11) **EP 1 602 810 A1**
(43) Veröffentlichungstag der Anmeldung: **07.12.2005**
(21) Anmeldenummer: 04013239.1
(22) Anmeldetag: 04.06.2004
(51) Int. Cl.: F02C 6/12, F04D 29/66, F02B 37/00

(54) **Absorberschalldämpfer für Verdichter**

(71) Anmelder: ABB Turbo Systems AG, 5400 Baden (CH)
(72) Erfinder: Feld, Heinz-Jürgen, CH-5524 Niederwil (CH); Girsberger, Rolf, CH-5408 Ennetbaden (CH)
(74) Vertreter: ABB Patent Attorneys

(57) **Zusammenfassung**

Der Absorberschalldämpfer des Verdichters eines Abgasturboladers ist im Bereich des Strömungskanals stromab des Verdichterrades angeordnet, wobei der Absorberschalldämpfer vor oder nach dem Leitapparat oder etwa als integraler Bestandteil desselben auf dessen Höhe angeordnet sein kann.

Die erfindungsgemässe Realisierung der Sekundärmassnahmen direkt an der Quelle führt dazu, dass nur wenige ungedämpfte Bereiche existieren, welche die gesamte Abstrahlung dominieren.

## Beschreibung

### Technisches Gebiet

Die Erfindung betrifft einen Verdichter gemäss dem Oberbegriff des Patentanspruchs 1 sowie einen Absorberschalldämpfer gemäss dem Oberbegriff des Patentanspruchs 8.

### Stand der Technik

In Systemen aus Verbrennungsmotoren und Abgasturbolader tragen die Abgasturbolader und deren angeschlossene Komponenten nicht unerheblich zum Gesamtschallpegel bei.

Insbesondere die am Verdichteraustritt angeschlossenen Komponenten wie Rohrleitungen, Kühler und Receiver strahlen den vom Turboladerverdichter in die Rohrleitung induzierten Lärm ab. Um das Niveau des abgestrahlten Lärmpegels zu senken, werden die Komponenten teilweise isoliert.

Bei den heutigen Abgasturboladern führen steigende Druckverhältnisse und wachsender Durchsatz zu immer höheren Schallemissionen.

Möglichkeiten zur Reduktion des Verdichteraustrittslärms sind einerseits Primärmassnahmen, bei denen die Quelle so beeinflusst wird, dass die Schallbildung reduziert wird und andererseits Sekundärmassnahmen, bei denen der schon entstandene Lärm gedämpft oder die Abstrahlung behindert (gedämmt) wird.

Am Verdichteraustritt wird der Lärm vor allem durch den Drehton, dessen Frequenz sich aus dem Produkt von Drehzahl und Hauptschaufelzahl ergibt, und seinen Harmonischen gebildet. Dabei wird ein grosser Anteil des verdichteraustrittsseitigen Lärms am Übergang von der Laufbeschaufelung des Verdichterrades zur Leitbeschaufelung des Leitapparates (Diffusor) gebildet.

Bisher scheiterten die meisten schallreduzierenden Massnahmen an diesen Stellen an den hohen technischen Anforderungen wie Druck, Temperatur und insbesondere den hohen Strömungsgeschwindigkeiten.

Kritisch ist in den Bereichen unmittelbar nach dem Verdichterrad bzw. am Verdichteraustritt vor allem die sehr hohe Geschwindigkeit des strömenden Mediums. Sie beträgt nach dem Leitapparat 80 bis 100 m/s, vor dem Leitapparat sogar bis zu einigen 100 m/s. Dies behindert sowohl den Einsatz von konventionellen Resonatorschalldämpfern wie auch Absorberschalldämpfern. Konventionelle Absorberschalldämpfer werden nicht über 50 m/s eingesetzt, da deren Absorptionsmaterial sonst ausgewaschen wird.

### Kurze Darstellung der Erfindung

Der Erfindung liegt die Aufgabe zugrunde, einen Verdichter zu schaffen, welcher möglichst nahe an den Lärmquellen mit einem Absorberschalldämpfer ausgestattet ist. Weiter ist es eine Aufgabe der Erfindung, einen Absorberschalldämpfer zu schaffen, welcher in einem Verdichter möglichst nahe an den Lärmquellen einsetzbar ist.

Erfindungsgemäss ist der Absorberschalldämpfer des Verdichters im Bereich des Strömungskanals stromab des Verdichterrades angeordnet, wobei der Absorberschalldämpfer vor dem Leitapparat, d.h. zwischen Verdichterrad und den Leitschaufeln des Leitapparats, nach dem Leitapparat, beispielsweise im Druckbehälter des Spiralgehäuses oder im Verdichteraustrittsstutzen, oder etwa als integraler Bestandteil des Leitapparates auf dessen Höhe angeordnet sein kann.

Die erfindungsgemässe Realisierung der Sekundärmassnahmen direkt an der Quelle führt dazu, dass nur wenige ungedämpfte Bereiche existieren, welche die gesamte Abstrahlung dominieren.

Die Anordnung des Absorberschalldämpfers im Innern des Verdichtergehäuses bietet zudem den Vorteil, dass zum Zwecke der Lärmdämmung keine Eingriffe in Komponenten notwendig sind, welche nicht zum Verdichter, bzw. dem Abgasturbolader gehören.

Der Absorberschalldämpfer weiset eine Abdeckung aus einem akustisch transparenten Metallgewebe auf, welche das schallabsorbierende Material am Austritt in den Strömungskanal hindert. Das Metallgewebe weist vorteilhafterweise eine glatte Oberfläche auf, insbesondere zu dem Strömungskanal hin, damit die Strömung keine nennenswerten Verluste erleidet.

Um Ausspühlungen durch die starke Strömung noch zusätzlich entgegenzuwirken, kann der Schalldämpfer, insbesondere in Bereichen mit grossen Druckdifferenzen, zusätzlich durch Schotts in einzelne Segmente unterteilt werden.

Weitere Vorteile ergeben sich aus den abhängigen Ansprüchen.

### Kurze Beschreibung der Zeichnungen

Im folgenden sind anhand der Figuren verschiedene Ausführungsformen des erfindungsgemässen Absorberschalldämpfers schematisch dargestellt und näher erläutert.

In allen Figuren sind gleichwirkende Elemente mit gleichen Bezugszeichen versehen.

Es zeigen:
- Fig. 1: schematisch einen Schnitt durch einen Verdichter mit einer ersten Ausführungsform eines erfindungsgemässen Absorberschalldämpfers mit einer Abdeckung aus einem Gewebe,
- Fig. 2: schematisch einen Schnitt durch einen Verdichter mit einer zweiten Ausführungsform eines erfindungsgemässen Absorberschalldämpfers,
- Fig. 2: einen Schnitt durch einen Leitapparat mit einem integrierten erfindungsgemässen Absorberschalldämpfer, und

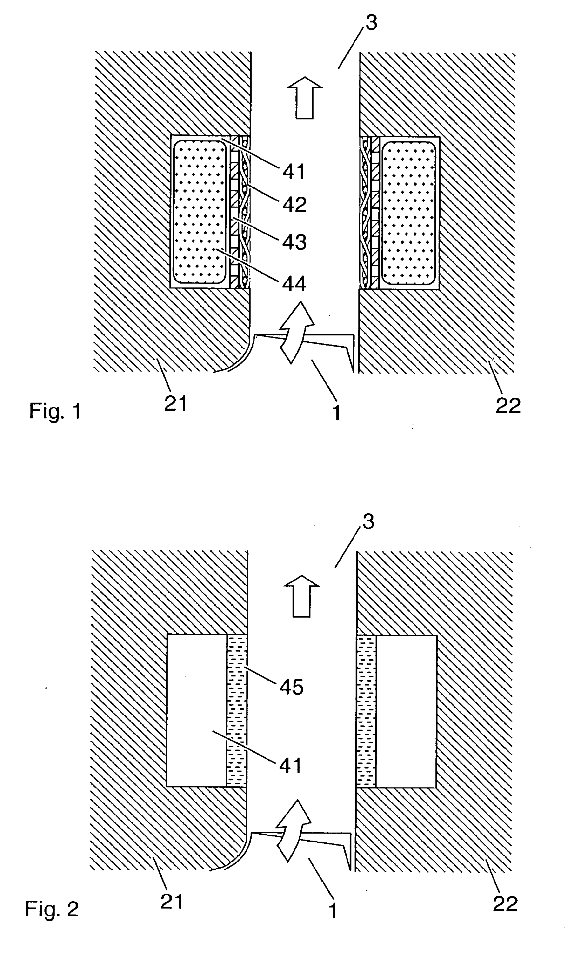

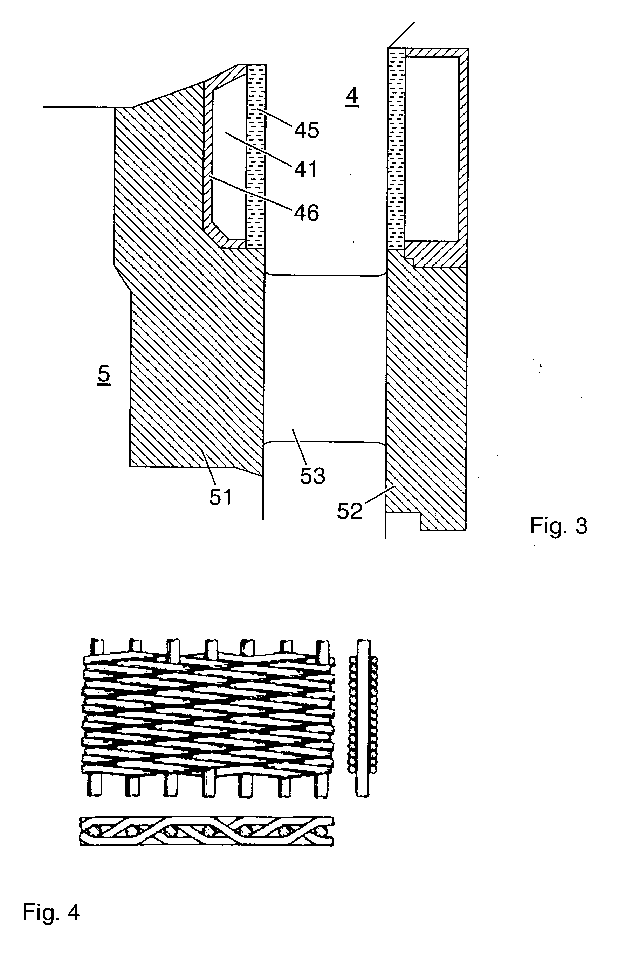

- Fig. 4: eine Detaildarstellung einer möglichen Ausbildung des Gewebes der Abdeckung nach Fig. 1.

### Weg zur Ausführung der Erfindung

Fig. 1 zeigt schematisch einen Ausschnitt eines Verdichters. Im nur teilweise dargestellten Verdichtergehäuse, umfassend ein gaseintrittsseitiges Gehäuseteil 21 und ein gasaustrittsseitiges Gehäuseteil 22, ist ein Verdichterrad 1 angeordnet, welches ebenfalls nur ansatzweise dargestellt ist. Das Verdichterrad ist über eine Welle mit einem Antrieb verbunden, beispielsweise mit einer abgasbetriebenen Turbine. Das zu verdichtende Medium, beispielsweise Luft für einen Verbrennungsmotor, wird durch einen Strömungskanal 3 geführt und dabei durch das rotierende Verdichterrad bearbeitet. Der Strömungskanal führt im Verdichter von dem lufteintrittsseitigen Ansaugstutzen über das Verdichterrad bis zu einem in der Regel spiralförmigen Druckbehälter, von welchem aus das verdichtete Medium aus dem Verdichter hinausgeführt wird, beispielsweise auf die Zylinder eines Verbrennungsmotors.

Das Verdichterrad setzt sich aus einer Nabe und aus auf dieser Nabe angeordneten Laufschaufeln zusammen. Nach dem Verdichterrad wird das Medium auf einen in Fig. 1 ebenfalls nicht dargestellten Leitapparat (Diffusor) mit Leitschaufeln geführt. Am Übergang von der Laufbeschaufelung des Verdichterrades zur Leitbeschaufelung des Leitapparates wird ein erheblicher Anteil des Lärms des Verdichters generiert, da das beschleunigte Medium auf die quer in dem Strömungskanal angeordneten Leitschaufeln stösst und dabei erheblich verlangsamt wird.

Der erfindungsgemässe Absorberschalldämpfer, welcher in diesem Bereich angeordnet ist, umfasst in der ersten, in Fig. 1 dargestellten, Ausführungsform eine mit einem schallabsorbierenden Material 44 gefüllte Kammer. Beim schallabsorbierenden Material dieser Ausführungsform handelt es sich beispielsweise um einen Filz aus hochfeinen rostfreien Stahlfasern (Beispielsweise unter dem Produktname Bekinox bekannt). Damit das schallabsorbierende Material von der reissenden Strömung im Strömungskanal nicht mitgerissen und aus der Kammer ausgeschwemmt wird, ist die Kammer gegen den Strömungskanal 3 durch ein Abdeckblech 42 abgedeckt. Das Abdeckblech umfasst beispielsweise ein feinmaschiges, strömungsresistentes Gewebe und ist idealerweise akustisch transparent für den gesamten Betriebstemperaturbereich des Verdichters, beispielsweise bis zu 200-300° C.

Als Abdeckblech eignet sich beispielsweise ein Metallgewebe, wie es in Fig. 4 detailliert dargestellt ist. Dabei handelt es sich um ein sogenanntes Köpertresse-Gewebe. Bei dieser Gewebeart werden die Schussdrähte in Köperbindung (jeder dritte Draht ist eingebunden) gewoben und dann aneinandergeschlagen. Der Vorteil dieser Gewebeart besteht in der sehr glatten Oberfläche und der äusserst feinen Filtrierung. Andere Gewebearten mit vergleichbaren Eigenschaften bezüglich Strömungsresistenz, Filterung und akustischer Transparenz können ebenfalls verwendet werden.

Um das allenfalls nicht sehr steife Abdeckblech gegen Verformung zu schützen, kann zwischen der Kammer und dem Abdeckblech, oder alternativ zwischen dem Abdeckblech und dem Strömungskanal, eine stützende Platte 43 aus einem festeren Material angeordnet werden. Beispielsweise ein Lochblech, welches die akustische Wirkung des Absorberschalldämpfers nicht beeinträchtigt, oder ein Drahtgitter. Das Abdeckblech kann dabei an der Stützplatte befestigt, beispielsweise angenietet oder verklebt, werden.

Der Schalldämpfer kann auf ein- oder beidseitig des Strömungskanals ringförmig entlang des gesamten, oder aber nur ringsegmentförmig entlang eines Teils oder mehreren Teile des Umfangs des Strömungskanals angeordnet sein. Dabei kann der Schalldämpfer in Umfangsrichtung des Strömungskanals oder in Strömungsrichtung in mehrere Kammern unterteilt sein, um durch ein allfälliges grosses Druckgefälle verursachte, unerwünschte Zirkulationsströmungen innerhalb des Schalldämpfers zu verhindern.

Der erfindungsgemässe Absorberschalldämpfer in der in Fig. 2 dargestellten Ausführungsform umfasst wiederum eine Kammer 41. Bei dieser Ausführungsform erfolgt jedoch die Abdeckung durch ein schallabsorbierendes Blech 45, bzw. eine Schicht oder eine Platte aus einem schallabsorbierenden Material, etwa einer Platte aus gesintertem Aluminium. Die genaue Dicke ist abhängig von der Strömungsbelastung und von den Anforderungen an das Absorptionsverhalten. Die tiefe der Kammer 41 hinter der schallabsorbierenden Platte ist auf die zu dämpfenden Frequenzen abgestimmt. Die Kammer 41 kann dabei leer, d.h. mit Luft gefüllt, sein, oder ein weiteres schallabsorbierendes Material umfassen. Wiederum kann der Schalldämpfer durch Rippen (Schotts) in einzelne Kammern unterteilt sein. Dabei können einzelne Kammern auf verschiedene Frequenzen abgestimmt sein, und auf diese Weise ein grösserer Frequenzbereich gedämpft werden.

Fig. 3 zeigt eine Anwendungsmöglichkeit des erfindungsgemässen Absorberschalldämpfers 4 als Bestandteil des Leitapparates (Diffusor) 5. Der Leitapparat umfasst ein oder zwei Gehäusewände 51 und 52 und Leitschaufeln 53, welche im montierten Zustand des Leitapparates im Strömungskanal des Verdichters angeordnet sind. Der Absorberschalldämpfer gemäss dieser Darstellung umfasst wiederum eine Kammer 41 sowie eine schallabsorbierende Abdeckung 45. Wiederum können Schalldämpfer ein- oder beidseitig des Strömungskanals angeordnet sein. Da der Absorberschalldämpfer als separater Einsatz gefertigt sein kann, welcher als zusätzliches Bauteil in den Leitapparat eingesetzt werden kann, umfasst er zusätzlich eine Rückwand 46, welche die Hohlkammer begrenzt.

In der dargestellten Ausführungsform ist der Absorberschalldämpfer in Strömungsrichtung stromab, d.h. nach den Leitschaufeln angeordnet. Zusätzlich oder alternativ kann der Absorberschalldämpfer aber auch stromauf, d.h. vor den Leitschaufeln oder auf der Höhe der Leitschaufeln des Leitapparates angeordnet sein.

Der erfindungsgemässe Schalldämpfer mit der strömungsresistenten Abdeckung kann auch an anderen Stellen des Verdichters angeordnet sein, etwa im lufteintrittsseitigen Ansaugbereich oder aber weiter stromab des Leitapparates im Druckbehälter des Spiralgehäuses des Verdichters oder am Ausgang des Verdichtergehäuses. Aufgrund der grossen möglichen Absorbierungsfläche und der Nähe zur Lärmquelle eignet sich das Spiralgehäuse besonders gut für einen Absorberschalldämpfer der erfindungsgemässen Art. Am Ausgang des Verdichtergehäuses, im Gasaustrittsstutzen kann der Schalldämpfer analog zur Ausführung gemäss Fig. 3 als separater Einsatz gefertigt sein, welcher dann bei der Montage als zusätzliches Bauteil von ausserhalb des Verdichters in den Austrittsstutzen eingesetzt werden kann.

### Bezugszeichenliste

- 1: Verdichterrad
- 21, 22: Verdichtergehäuse
- 3: Strömungskanal
- 4: Absorberschalldämpfer
- 41: Kammer
- 42: Abdeckblech
- 43: Stützplatte
- 44: Schallabsorbierendes Material
- 45: schallabsorbierendes Abdeckblech
- 46: Rückwand
- 5: Leitapparat, Diffusor
- 51, 52: Diffusorwände
- 53: Leitschaufeln

## Patentansprüche

1. Verdichter zum Verdichten eines Mediums, umfassend
ein Verdichtergehäuse (21, 22), ein im Verdichtergehäuse angeordnetes, drehbar gelagertes Verdichterrad (1) mit einer Nabe und auf der Nabe angeordneten Laufschaufeln,
einen Strömungskanal (3) für das zu verdichtende Medium, welcher von einem verdichtereintrittsseitigen Ansaugbereich über einen Laufschaufelbereich führt und in einen verdichteraustrittsseitigen Druckbehälter mündet, wobei der Strömungskanal im Laufschaufelbereich durch die Nabe und das Verdichtergehäuse (21) begrenzt ist, einen Leitapparat (5), welcher im Strömungskanal in Strömungsrichtung des zu verdichtenden Mediums zwischen dem Laufschaufelbereich und dem Druckbehälter angeordnet ist, sowie
einen Schalldämpfer (4) zum Reduzieren des vom Verdichter erzeugten Lärms,
**dadurch gekennzeichnet, dass**
der Schalldämpfer in Strömungsrichtung des zu verdichtenden Mediums stromab des Laufschaufelbereichs angeordnet ist, und dass der Schalldämpfer in diesem Bereich zumindest teilweise den Strömungskanal begrenzt.

2. Verdichter nach Anspruch 1, **dadurch gekennzeichnet, dass** der Schalldämpfer ein Absorberschalldämpfer ist, und dass der Absorberschalldämpfer ein schallabsorbierendes Material (44) umfasst, welches mittels einer akustisch transparenten Abdeckung (42) vom Strömungskanal abgegrenzt ist.

3. Verdichter nach Anspruch 2, **dadurch gekennzeichnet, dass** die Abdeckung (45) ein akustisch transparentes Metallgewebe umfasst.

4. Verdichter nach Anspruch 3, **dadurch gekennzeichnet, dass** das akustisch transparente Metallgewebe mittels einer Stützplatte (43) zwischen dem schallabsorbierenden Material und dem Strömungskanal befestigt ist.

5. Verdichter nach Anspruch 2, **dadurch gekennzeichnet, dass** zumindest Teile (44, 45) des Absorberschalldämpfers ein Material mit einer schallabsorbierenden Struktur umfassen.

6. Verdichter nach Anspruch 5, **dadurch gekennzeichnet, dass** zumindest Teile (44, 45) des Absorberschalldämpfers ein poröses Metall umfassen.

7. Verdichter nach Anspruch 6, **dadurch gekennzeichnet, dass** das poröse Metall eine geschäumte Aluminiumlegierung umfasst.

8. Absorberschalldämpfer zum Reduzieren des von einem Verdichter erzeugten Lärms, umfassend mindestens eine Kammer (41), welche einen Strömungskanal (3) zumindest teilweise umschliesst,
wobei die mindestens eine Kammer gegen den Strömungskanal hin durch ein Abdeckblech (42, 45) vollständig abgedeckt ist,
**dadurch gekennzeichnet, dass**
das Abdeckblech aus einem strömungsresistenten Material gefertigt ist und/ oder eine strömungsresistente Struktur aufweist.

9. Absorberschalldämpfer nach Anspruch 8, **dadurch gekennzeichnet, dass** das Abdeckblech (45) aus einem schallabsorbierenden Material gefertigt ist und/ oder eine schallabsorbierende Struktur aufweist.

10. Absorberschalldämpfer nach Anspruch 9, **dadurch gekennzeichnet, dass** das Abdeckblech (45) als eine Schicht schallabsorbierendes, poröses Metall ausgebildet ist.

11. Absorberschalldämpfer nach einem der Ansprüche 8 bis 10, **dadurch gekennzeichnet, dass** die Kammer zumindest teilweise mit einem schallabsorbierenden Material (44) gefüllt ist.

12. Absorberschalldämpfer nach einem der Ansprüche 8 bis 11, **dadurch gekennzeichnet, dass** die Kammer durch mindestens ein Schott in mindestens zwei Segmente unterteilt ist.
